# EUROPEAN PATENT APPLICATION

(11) **EP 2 639 730 A1**
(43) Date of publication of application: **18.09.2013**
(21) Application number: 12198608.7
(22) Date of filing: 20.12.2012
(51) Int. Cl.: G06F 21/32

(54) **Authentication system, processor, and program**

(30) Priority: 15.03.2012 JP 2012058307
(71) Applicant: FUJITSU LIMITED, Kawasaki-shi, Kanagawa 211-8588 (JP)
(72) Inventor: Wada, Atsushi, Kawasaki-shi, Kanagawa 211-8588 (JP)
(74) Representative: Schultes, Stephan

(57) **Abstract**

An authentication system including: an authenticator (12) configured to collate an object that is to be authenticated to determine whether the object is valid and sets, when the object is determined to be valid, an authentication state for the object; a detector (14) configured to continuously detect, after the setting by the authenticator (12), the presence of the object; and an authentication canceller (17) configured to cancel, when the detector (14) detects the absence of the object, the authentication state set for the object. This configuration makes it possible to avoid an unauthorized use of the authentication system.

## Description

### FIELD

The embodiments discussed herein provide an authentication system, a processor, and a program.

### BACKGROUND

Unauthorized use of an information processor, such as a personal computer, is avoided by user authentication using a password, biological data, and an ID (identification) card, so that use of the information processor is restricted.

However, user authentication performed only once when the user starts using the processor is incapable of grasping whether the same user is continuously using the processor after the authentication. For the above, a demand arises for managing and confirming the state of using an information processor.

For example, one of the known methods of avoiding unauthorized use of an information processor is to intermittently authenticate the current user at a predetermined time period or at predetermined operation timings.
[Patent Literature 1] Japanese Laid-open Patent Publication No.2002-55956
[Patent Literature 2] Japanese Laid-open Patent Publication No. 2005-115480

However, when the cycle of user authentication is set to be short in order to accurately detect replacement of a user, such a method of avoiding unauthorized use frequently demands authentication. When the authentication adopts face authentication, authentication is not successful if the user is facing right/leftward and downward, and therefore the user needs to face the camera. Accordingly, the user of the information processor is annoyed by frequent demand for facing the camera for authentication. Furthermore, since authentication fails if user is not facing the camera when the authentication is carried out, the convenience user is impaired.

When face authentication for user authentication is substituted by another manner using, for example, a fingerprint and the cycle of authentication is set to be short in order to surely detect invalid replacement of the user, the user is frequently requested to undergo fingerprint authentication, which declines the convenience of the user.

### SUMMARY

It is desirable to avoid unauthorized use of an authentication system.

In addition, effects derived from the various configurations of the following embodiment to describe the invention but not achieved by conventional techniques are also regarded as desirable of the present invention.

According to an embodiment, there is provided an authentication system including: an authenticator configured to collate an object that is to be authenticated to determine whether the object is valid and sets, when the object is determined to be valid, an authentication state for the object; a detector configured to continuously detect, after the setting by the authenticator, the presence of the object; and an authentication canceller configured to cancel, when the detector detects the absence of the object, the authentication state set for the object.

According to an embodiment, there is provided a processor including: a detector configured to continuously detect, after an object that is to be authenticated is determined to be valid as a result of collation and an authentication state is set for the object determined to be valid, the presence of the object; and an authentication canceller configured to cancel, when the detector detects the absence of the object, the authentication state set for the object.

The various features may be implemented in hardware, or as software modules running on one or more processors. Software can be embodied in the form of a computer program or a computer program product for carrying out any of the methods described herein, and a computer readable medium having stored thereon a program for carrying out any of the methods described herein. A computer program embodying the invention may be stored on a computer-readable medium or it could, for example, be in the form of a signal such as a downloadable data signal provided from an Internet website, or it could be in any other form.

According to an embodiment, there is provided a program which, when executed by a computer, causes the computer to perform a process including: after an object that is to be authenticated is determined to be valid as a result of collation and an authentication state is set for the object determined to be valid, continuously detecting the presence of the object; and cancelling, when detecting the absence of the object, the authentication state set for the object.

The technique disclosed above has an advantage of avoiding unauthorized use of an authentication system.

Additional embodiments and/or advantages of the invention will be realized and attained by means of the elements and combinations particularly pointed out in the claims. It is to be understood that both the foregoing general description and the following detailed description are exemplary and explanatory and are not restrictive of the invention.

### BRIEF DESCRIPTION OF DRAWINGS

Specific embodiments will be described in further detail below on the basis of the accompanying drawings, in which:
FIG. 1 is a diagram schematically illustrating an example of the configuration of an information processor according to a first embodiment of the present invention;
FIG. 2 is a diagram schematically illustrating an example of the hardware configuration of an information processor of the first embodiment of the present invention;
FIG. 3 is an example of log data of an information processor of the first embodiment;
FIG. 4 is a flow diagram denoting a succession of procedural steps performed by an information processor of the first embodiment; and
FIG. 5 is a flow diagram denoting a succession of procedural steps of personal authentication by an information processor of the first embodiment.

### DESCRIPTION OF EMBODIMENT(S)

Hereinafter, description will now be made in relation to an authentication system, a processor, and a program according to a first with reference to the accompanying drawings. However, it should be noted that the following embodiment is an example, and there is no intention to exclude modifications and application of techniques that are not mentioned in the following embodiment and a modification thereof. In other words, the following embodiment and modification can be changed or modified without departing from the concept of the present invention. Furthermore, the accompanying drawings may of course include additional elements and functions to those illustrated in the drawings.

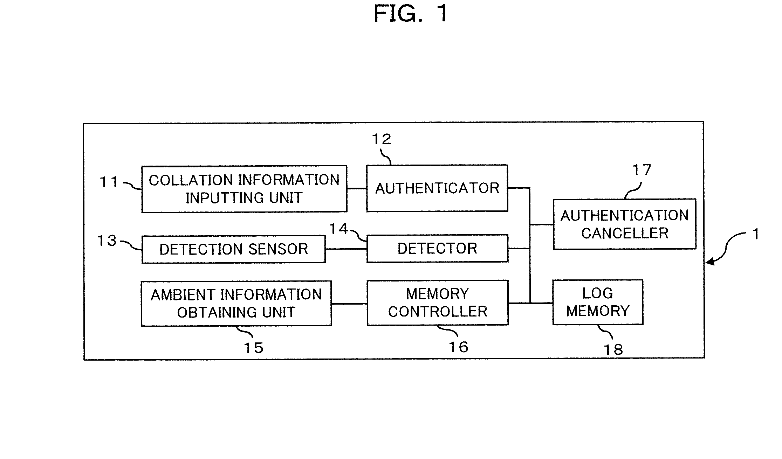

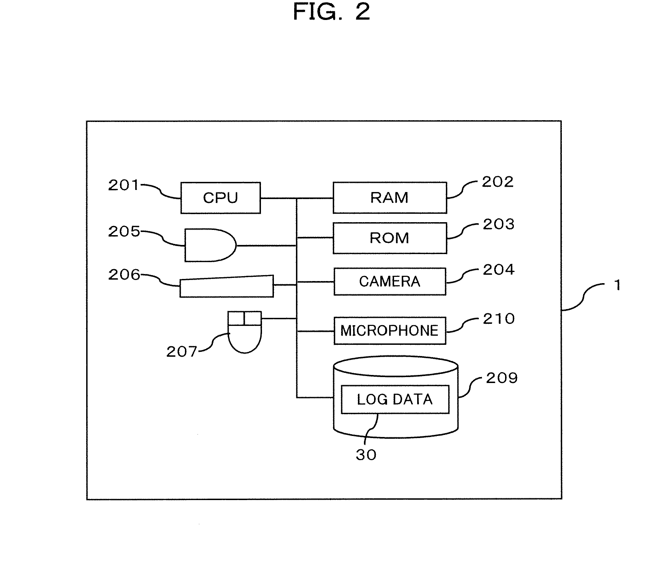

FIG. 1 is a diagram schematically illustrating an example of the functional configuration of an information processor of the first embodiment; and FIG. 2 is a diagram illustrating an example of the hardware configuration of the information processor.

An example of an information processor (authentication system, processor) 1 is a laptop or desktop computer. As illustrated in FIG. 2, the information processor 1 includes a Central Processing Unit (CPU) 201, a Random Access Memory (RAM) 202, a Read Only Memory (ROM) 203, a camera 204, a display 205, a keyboard 206, a mouse 207, a memory 209, and a microphone 210.

The ROM 203 is a memory device that stores various pieces of data and programs. The RAM 202 is another memory device in which data and program are temporarily stored when the CUP 201 is calculating.

The keyboard 206 and the mouse 207 are input devices with which a user (object to be authenticated) inputs various data. A user inputs a password (collation information) using the keyboard 206 or the mouse 207. The password input is used as collation information in user authentication by the authenticator 12, which will be detailed below. Namely, the keyboard 206 and the mouse 207 function as a collation information inputting unit 11 that inputs collation information.

An example of the camera 204 is a WebCamera and takes a photograph of a user of the information processor 1. The camera 204 is incorporated in or attached to the frame or another part of the display 205 so as to face the user. Specifically, the camera 204 takes a photograph of a user at a predetermined position in front of the information processor 1 and preferably takes a photograph of the face of the user.

Here, the predetermined position is a position where the user can visually recognize the contents displayed on the display 205 and also operate keyboard 206 and mouse 207. For example, if a seat is disposed at such a predetermined position, a user sitting on the seat can visually recognize the contents on the display 205 and can operate the keyboard 206 and the mouse 207. The camera 204 is disposed at a position where a user sitting on the seat can be recorded.

The camera 204 of the information processor 1 is capable of taking both still image and moving image.

The image (still image, moving image) taken by the camera 204 is sent to the CPU 201. The camera 204 functions as a detection sensor 13 that continuously detects the presence of the user, and also functions as an ambient information obtaining unit 15 that obtains information (ambient information) of the surrounding of the information processor 1. The image obtained by the camera 204 is stored in the memory 209.

The microphone 210 is, for example, incorporated in or attached to the frame or other part of the display 205, and obtains sound information of the ambient sounds and voices of the information processor 1. The microphone 210 also functions as the ambient information obtaining unit 15 that obtains information (ambient information) of the surrounding of the information processor 1. The sound information obtained by the microphone 210 is also stored in the memory 209.

The display 205 is, for example, a monitor such as a Liquid Crystal Display, and is a device that displays thereon results of calculations by the CPU 201 and information to be provided to the user.

The memory 209 is a memory device that stores various pieces of data and programs, and is exemplified by a Hard Disk Drive (HDD) or a Solid State Drive (SSD). In addition, registration information (not illustrated) that the authenticator 12 to be detailed below uses for user authentication is stored in the memory 209 beforehand. An example of the registration information is a password (registered password) that each individual user has determined and registered and is associated with identification information (user ID) to specify the user. This means that the memory 209 function also as a registration information memory that records registration information.

The memory 209 keeps log data 30 that stores recorded data including image taken by the camera 204 and sound information collected by the microphone 210. Namely, the memory 209 functions also as a log memory (ambient information memory) 18 that records the ambient information of the surrounding of the information processor 1.

The CPU 201 achieves various calculations and controls by executing an Operating System (OS) and various programs stored in the ROM 203 and the memory 209. Execution of the program in the memory 209 by the CPU 201 causes the information processor 1 of the first embodiment to function as the authenticator 12, a detector 14, a memory controller 16, and an authentication canceller 17 that are illustrated in FIG. 1.

The program to achieve the functions of the authenticator 12, the detector 14, the memory controller 16, and the authentication canceller 17 is provided in the form of being stored in a computer-readable recording medium such as a flexible disk, a CD (e.g., CD-ROM, CD-R, CD-RW), and a DVD (e.g., DVD-ROM, DVD-RAM, DVD-R, DVD+R, DVD-RW, DVD+RW, HD DVD), a Blu-ray disk, a magnetic disk, an optical disk, and a magneto-optical disk. The computer reads the program from the recording medium and forwards and stores the program into an internal or external memory for future use. The program may be stored in a storage device (recording medium), such as a magnetic disk, an optical disk, and a magneto-optical disk, and may be provided to a computer from the storage device through a communication route.

The functions of the authenticator 12, the detector 14, the memory controller 16, and the authentication canceller 17 are achieved by a microprocessor (corresponding to the CPU 201 of the first embodiment) executing a program stored in an internal memory (corresponding to the RAM 202 or the ROM 203 in the first embodiment). Alternatively, a computer may read a program stored in a recording medium and execute the read program.

In the first embodiment, a computer is a concept of a combination of hardware and an Operating System (OS), and means hardware which operates under control of the OS. Otherwise, if a program operates hardware independently of an OS, the hardware corresponds to the computer. Hardware includes at least a microprocessor such as a CPU and means to read a computer program recorded in a recording medium. In the first embodiment, the information processor 1 serves to function as a computer.

The authenticator 12 authenticates an object to be authenticated to determine whether the object is valid. In the first embodiment, a user of the information processor 1 corresponds to an object to be authenticated. For example, the authenticator 12 compares (collates) a password (collation information) input using the collation information inputting unit 11 (the keyboard 206 or the mouse 207) by a user with a registration password (registered password) stored in the memory 209 in association with the identification data of the user to be authenticated. When the input password matches the registered password, the authenticator 12 determines that the user input the password is the valid user (valid object). Except for the above, the authenticator 12 may adopt various manners of authentication known to the public, the description of which is however omitted here. Hereinafter, the authentication carried out by the authenticator 12 to authenticate a user will be sometimes referred to as "personal authentication".

The authenticator 12 carries out collation of a user as the above and, when the result of the collation determines that the user is valid, set an authentication state for the user determined to be valid. For example, when a user is determined to be valid as a result of the collation, the authenticator 12 sets "1" in an authentication flag that indicates whether the object to be authenticated is valid and that is reserved at a predetermined memory region of the RAM 202 or the memory 209.

Under the state where the authentication flag is set to "1" (i.e., under the authentication state), the current user of the information processor 1 is determined to have valid authority and is provided with authority to use the information processor 1. Specifically, a log-in process is carried out using the account of the user, so that various functions provided for the valid authorized user come to be enabled. In contrast, under the state where the authentication flag is not set to "1" (i.e., set to be "0"), the current user of the information processor 1 is determined not to have valid authority and a non-illustrated security function limits predetermined one or more functions. For example, under a state where the authentication flag is not set to "1", the functions other than the function of authenticating by the authenticator 12 are disabled to lock the information processor 1 (i.e., locking state).

Under the locking state, part of functions, such as the function of authenticating by the authenticator 12, is enabled while data access to, for example, the memory 209 is disabled. The user is not allowed to use the information processor 1 unless the authenticator 12 authenticates the user again and sets "1" in the authentication flag.

The functions that can be used by a valid authorized user and the functions disabled for a user determined not to be valid may be modified.

The authenticator 12 authenticates the user at various predetermined timings of, for example, powered-on or restart of the information processor 1, restoration from a power-saving mode, restoration from a locking state, and execution of the program to activate the authenticator 12.

The detector 14 continuously detects the presence or the absence of the user. Specifically, the detector 14 detects, on the basis of the image data obtained by the detection sensor 13 (the camera 204), whether the user is present at the predetermined position in front of information processor 1. For example, the detector 14 has a function of analyzing image and determines whether the image obtained by the camera 204 includes the image of the user. When the obtained image includes the image of the user, the detector 14 detects the presence of the user whereas when the obtained image does not include the image of the user, the detector 14 detects the absence of the user.

While a user have a seat disposed at the predetermined position in front of the information processor 1, the image obtained by the camera 204 includes the image of the user. When the user leaves the seat, the image obtained by the camera 204 does not include the image of the user. Namely, the detector 14 detects the presence or the absence of the user sitting on the seat disposed at the predetermined position of the information processor 1.

Alternatively, the detector 14 may detect the presence or the absence of a user on the basis of the silhouette or a change in color histogram in the image obtained by the camera 204.

The detector 14 starts recording the image of the user through the use of the camera 204 and determining the presence or the absence of the user on the basis of the image obtained by the camera 204 when, for example, the information processor 1 is powered on.

After the authenticator 12 authenticates the user, the detector 14 continuously detects the presence and the absence of the user on the basis of the image obtained by the camera 204.

The detector 14 serves to function as a continuous recognizing section that continuously recognizes the presence of the user, and detects (recognizes) that the user is continuously present after the authentication by the authenticator 12.

When detecting the absence of the user from the predetermined position with reference to the image obtained by the camera 204, the detector 14 notifies the authentication canceller 17 and the memory controller 16 of the detection of the absence of the user. Hereinafter, detection of the absence of the user is sometimes referred to as detection of leaving.

Furthermore, when detecting the presence of a user at the predetermined position under a state where a user is absent, the detector 14 notifies the authentication canceller 17 and the memory controller 16 of the detection of the presence of a user. Hereinafter, detection of the presence of the user under a state where a user is absent is sometimes referred to as detection of seating.

The detector 14 may detect replacement of the user present at the predetermined position with another person. For example, the detector 14 can detect the replacement by recognizing the face of the user in the face image obtained by the camera 204. The recognition of the face based on a face image can be achieved by various known manners, and the detailed description thereof is omitted here. Hereinafter, detection of replacement of the user by another person is sometimes referred to as detection of replacement.

The image of a user that is to be used for detection of the presence of the absence of the user is obtained by the camera 204 when, for example, the authenticator 12 in the information processor 1 authenticates the user. Alternatively, the image of a user may be registered beforehand, and various modifications are suggested.

The detector 14 has a function of detecting a peep by a person except for the user by detecting, in the image obtained by the camera 204, another person directing toward the display 205 in addition to the user at the predetermined position. For example, when the image recorded by the camera 204 contains two or more face image having a predetermined size or larger, the detector 14 detects a peep. The recognition of the presence of two or more faces in an image can be achieved by various known manners, and the detailed description thereof is omitted here. Hereinafter, detection of peeping by another person is sometimes referred to as detection of a peep.

Hereinafter, the detections of seating, leaving, replacement, and a peep by the detector 14 are sometimes referred to collectively as trace.

The authentication canceller 17 cancels, upon receipt of the notification of detection of the absence of the user from the detector 14, the authentication state that the authenticator 12 set for the user. Specifically, when receiving the notification of detecting the absence of the user from the detector 14, the authentication canceller 17 cancels the authentication flag set by the authenticator 12 (i.e., sets "0" in the flag).

Thereby, the information processor 1 is, for example, locked, so that the functions except for the function of authenticating by the authenticator 12 are disabled. This means that the user is locked out.

The memory controller 16 obtains ambient information of the surrounding of the information processor 1 using the ambient information obtaining unit 15 (the microphone 210 and the camera 204), and registers the obtained ambient information (recorded data) into the log data 30. Specifically, the memory controller 16 causes the microphone 210 to collect sound (including voice) of the surrounding of the information processor 1 and registers the sound information, as the recorded data, into the log data 30 of the memory 209. The memory controller 16 also causes the camera 204 to take still or moving images of the surrounding of the information processor 1, and registers the image data into the log data 30.

When a particular event occurs in the information processor 1, the memory controller 16 records the occurrence of the event into the log data 30. For example, when the detector 14 notifies detection of leaving, seating, or a peep when the authenticator 12 starts authentication of a user, or when the user opens an important document, the memory controller 16 records the respective events into the log data 30.

Opening an important document corresponds to a time when data attached thereto specifying data as an important document in advance is selected and executed (opened) on the information processor 1.

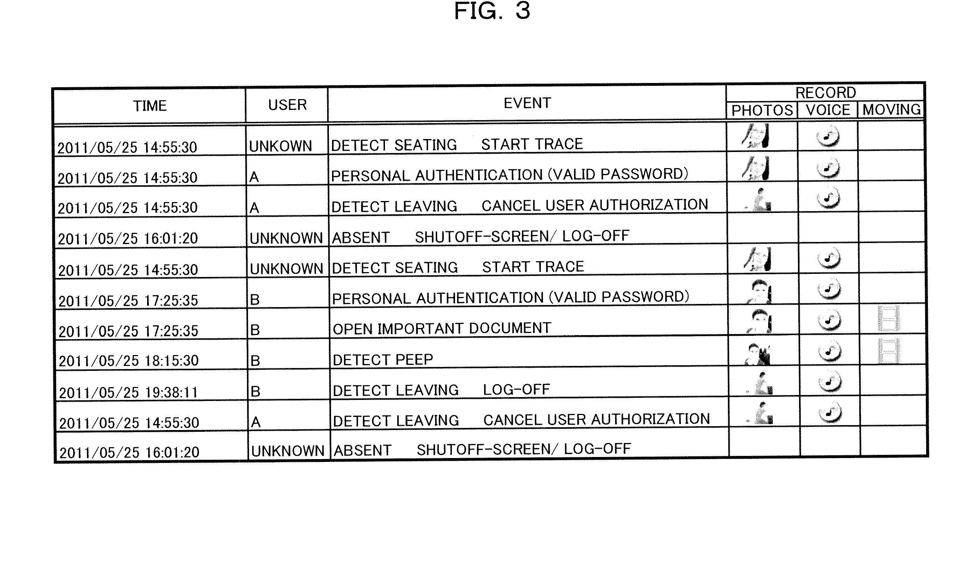

FIG. 3 is a table denoting an example of the log data 30 of the information processor 1 of the first embodiment.

In the example of FIG. 3, the log data 30 is constructed by associating time data, user data, event data, and recorded data with one another.

Here, the event data represents the contents of respective events occurred. Examples of an event are detection of seating; detection of leaving; detection of a peep; success or failure of password authentication by the authenticator 12; and open of an important document. In particular, since detection of leaving accompanies operation by the authentication canceller 17, an event of cancellation of the user authorization or log-off is also recorded.

The time data is information that specifies the date and the time when the event occurs. The user data is information that specifies the user using the information processor when the event occurs. For example, the name of a user authenticated by the authenticator 12 is registered as the user. The term "unknown" is registered in the user data for an event the user of which is unknown, such as the start of trace upon detection of leaving or seating.

The recorded data is data of still and moving image obtained by the camera 204 and data of sounds collected by the microphone 210, and is data being recorded by the camera 204 and /or 210. The record data represents the ambient status of the surrounding of the information processor 1 when the corresponding event is occurring.

For example, the memory controller 16 causes the camera 204 to take moving image only when an event determined to need a high security level is occurring while take only still image when other events are occurring. This can reduce the data size of the log data 30. In the example of FIG. 3, "open an important document" and "detection of a peep" are regarded as events need a high-security level and moving image of only these two events are recorded in the log data 30.

Particular events recorded through obtaining moving image are not limited to "open an important document" and "detection of a peep", and various modifications can be suggested.

The log data 30 is stored into a non-illustrated external server (backup server) at predetermined timings.

In the log data 30 of FIG. 3, for example, trace is started at 2011/05/25, 14:55:30, and still image (photograph) and sounds (including voice) of the user are recorded. After that, the user is identified to be user A as a result of authentication by the authenticator 12 at 2011/05/25 14:55:30, and still image (photograph) and sounds of the user are recorded.

From the table of FIG. 3, user A is confirmed to have a seat in front of the information processor 1 until leaving is detected at 2011/05/25 14:55:30.

For example, the detector 14 detects a peep at 2011/05/25 18:15:30, and the camera 204 obtains still and moving images and the microphone 210 records voices.

The first embodiment assumes that the log data 30 is included in the memory 209 of the information processor 1. However, the configuration is not limited to this. For example, the log data 30 may be included in an external device, such as an external server and a storage system connected to the information processor 1 via a network.

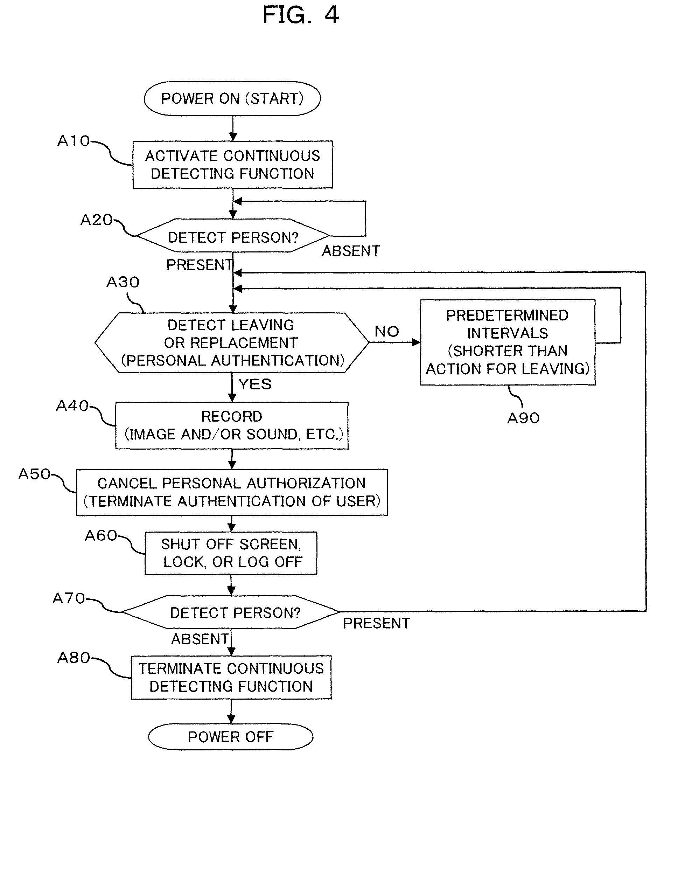

Description will now be made in relation to a succession of procedural steps performed in the information processor 1 of the first embodiment with reference to a flow diagram (steps A10-A90) of FIG. 4

For example, when the information processor 1 is powered on, the detector 14 starts recording an image of a user with the camera 204 (step A10).

The detector 14 detects the presence or the absence of an user (step A20). The detector 14 may detect the presence of a user on the basis of an image recorded by the camera 204 or detect the presence of a user when detecting input from the keyboard 206 or the mouse 207.

When a user is absent ("ABSENT" route in step A20), step A20 is repeated until the detector 14 detects the presence of a user at the seat.

When the detector 14 detects the presence of a user at the seat ("PRESENT" route in step A20), the detector 14 determines whether the user left the seat or replaced with anther person on the basis of the image recorded by the camera 204 in the ensuing step A30. When leaving or replacement is not detected (NO route in step A30), Step A30 is carried out again after a predetermined time period (step A90). Specifically, the detector 14 continuously detects the presence of a user, which makes it possible to periodically confirm that the user is continuously present (at predetermined intervals). The predetermined time period is shorter than time that a user takes to leave the seat, so that the detector 14 certainly detects leaving of the user.

Setting a time interval (predetermined time period) for detection at step A90 to be short, e.g., several milliseconds, makes substantially continuous detection of leaving and replacement of the user possible. This improves the security level.

In parallel with a procedural loop of detecting the presence of a user in steps A30 and A90, the authenticator 12 authenticates the user (personal authentication). The user inputs the password along with the user ID using the keyboard 206 and the mouse 207. The authenticator 12 authenticates the user by comparing (collating) the input password with a registered password previously stored in association with the user ID.

Even when the user is replaced with another person after the detection of the presence of the user at step A20 and during the authentication by the authenticator 12, this personal authentication makes it possible to detect the replacement, which improves the reliability of the information processor 1.

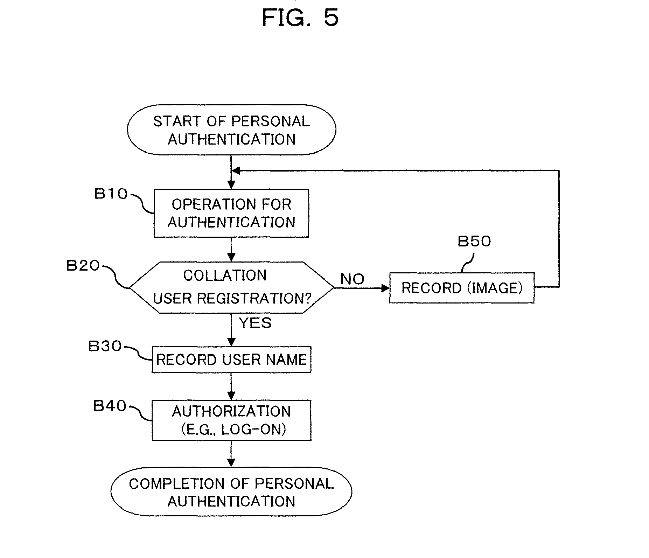

As a result of the personal authentication by the authenticator 12, the user is specified and the value "1" is set in the authentication flag, so that the user is authorized to use the information processor 1. The personal authentication by the authenticator 12 will be described below with reference to FIG. 5.

The first embodiment records the image of the user with the camera 204 in step A10, which is carried out before the authentication by the authenticator 12 at step A30. The timing of recording is not however limited to this.

The detection (trace) of the presence of the user by the detector 14 at step A30, which is carried out in parallel with the personal authentication, continuously detects the presence of the user under a state where the current user of the information processor 1 is specified.

When the detector 14 detects leaving or replacement of the user (YES route in step A30), the detector 14 notifies the memory controller 16 and the authentication canceller 17 of the leaving or the replacement. The memory controller 16 obtains the ambient information (sounds and image) of the surrounding of the information processor 1 using the microphone 210 and the camera 204, and records the obtained ambient information into the log data 30 (step A40).

The authentication canceller 17, for example, cancels the authentication state set for the user by canceling the authentication flag set by the authenticator 12 (i.e., set the value "0" in the flag) (step A50). This prevents the user from using the information processor 1. In order to use the information processor 1 again, the user needs undergo the personal authentication once again, so that unauthorized use by third party during the absence of the user can be avoided.

The authentication canceller 17 locks the information processor 1, also shuts off the display 205, and further makes the user in the log-off state (step A60). In order to use the information processor 1 again, the user needs undergo the personal authentication again, so that unauthorized use by third party during the absence of the user can be avoided.

After that, the detector 14 confirms the presence or the absence of the user (step A70). When the detector 14 detects the presence of the user ("PRESENT" route in step A70), the procedure returns to step A30. Conversely, when the detector 14 detects the absence of the user ("ABSENT" route in step A70), the detector 14 stops recording the user with the camera 204, so that the continuous detection of the user is terminated (step A80). After that, the information processor 1 is powered off and the procedure is terminated.

Next, description will now be made in relation to a manner of personal authentication of the information processor 1 of the first embodiment with reference to a flow diagram (steps B10-B50) of FIG. 5.

For example, to start personal authentication, a message to encourage the user to input the collation password is displayed on the display 205 and causes the user to input the password (step B10). The authenticator 12 authenticates the user by collating the input password with the password previously registered (step B20).

When the input password does not coincide with the registered password, that is, when the user is not identified to be the registered user as a result of the collation (NO route in step B20), the memory controller 16 obtains the ambient information of the surrounding of the information processor 1 using the microphone 210 and the camera 204. The obtained ambient information is registered into the log data 30 in association with the time of event and event information including the fact of failure in password authenticate (step B50).

When the input password coincides with the registered password, that is, when the user is authenticated to be the user him/herself as a result of the collation (YES route in step B20), the memory controller 16 obtains the ambient information of the surrounding of the information processor 1 using the microphone 210 and the camera 204. The obtained ambient information is registered in the log data 30 in association with the time of the event and the event information including the fact of success in password authentication (step B30).

After that, the user logs in the information processor 1 using the account of the user, so that various function allowed for valid authority come to available (step B40), and the personal authentication is completed.

As the above, in the information processor 1 of the first embodiment, the detector 14 detects whether the user is continuously seating after the authenticator 12 authenticates the user, which makes it possible to prove the continuous seating. Accordingly, there is no need to, for example, intermittently confirm whether the current user of the information processor 1 is a valid user, and this authentication manner is convenient.

Furthermore, since the detector 14 determines the presence or the absence of a user on the basis of the image obtained by the camera 204, the detection of a user can accomplished at a low cost without preparing a dedicated device.

When the detector 14 detects an event of leaving, replacement, or the like of the user, the memory controller 16 obtains the ambient information (voice and image) of the surrounding of the information processor 1 using the microphone 210 and the camera 204 and registers the obtained ambient information into the log data 30. The ambient state of the information processor 1 when an event is occurring can be confirmed by examining the recorded data in the log data 30, so that unauthorized access can be easily detected.

When the detector 14 detects an event of leaving, replacement, and others of the user, the authentication canceller 17 cancels the authentication state set for the user by the authenticator 12. This prevents the user from using the information processor 1. In order to use the information processor 1 again, the user needs undergo the personal authentication again, so that unauthorized use by third party during the absence of the user can be avoided.

Furthermore, when the detector 14 detects an event of leaving, replacement, and others of the user, the information processor 1 is powered off, so that unauthorized use by third party can surely avoided.

The technique disclosed above is not limited to the foregoing embodiment, and various changes and suggestions can be suggested without departing the gist of the first embodiment.

For example, in the first embodiment, the authenticator 12 authenticates a user on the basis of the password that the user inputs with the keyboard 206. However, the manner of authentication is not limited to this.

Alternatively, the information processor 1 may further include a fingerprint sensor (biological data obtaining device) serving as a collation information inputting unit 11, and the authenticator 12 may authenticate a user on the basis of a fingerprint image (biological data) obtained by the fingerprint sensor.

Further alternatively, the fingerprint sensor may be substituted with a palmprint sensor, a retina sensor, a microphone that obtains voice, which are to be used as the collation information inputting unit 11 that obtains other biological data. The collation information is not limited to a password input by a user, and alternative may be a palmprint, a retina, a voice print and others. Various examples of the collation information can be suggested.

Further, the camera 204 may be used as the collation information inputting unit 11 and personal authentication may be achieved by face authentication using the face image (collation information) of the user obtained by the camera 204.

In the above first embodiment, the information processor 1 uses the camera 204 as the detection sensor 13, and the presence of the user is detected on the basis of the image of the user obtained by the camera 204. However, the manner of the detection is not limited to this.

For example, the information processor 1 may further include a motion sensor utilizing infrared or ultrasound, which serves as the detection sensor 13. Alternatively, the presence of the user may be detected on the basis of typing of the keyboard 206 and inputting from the mouse 207. Namely, the function of the detection sensor 13 may be achieved by a program that detects inputting through the keyboard 206 and the mouse 207. Furthermore, at least two of the camera 204, various motion sensors, the program, and others may be used as the collation information inputting unit 11 in combination with each other.

In the above first embodiment, the information processor 1 includes the authenticator 12, the detector 14, the memory controller 16, and the authentication canceller 17, but the functional elements of the information processor 1 are not limited to these. At least part of these functions may be included in another information processor, such as a server.

The above first embodiment assumes that an object to be authenticated is a user of the information processor 1. However, the object to be authenticated is not limited to a user. Alternatively, an object to be authenticated may be animal or plants other than human or may be an inorganic article. Various changes and modifications of an object to be authenticated can be suggested.

For example, when an object to be authenticated is animal or plant, an IC tag may be attached to the object and the authenticator 12 may determine whether the object is valid on the basis of the information read from the IC tag.

In particular, when an object to be authenticated is a vehicle, the authenticator 12 may determine whether the vehicle is valid (valid object) by collation using a vehicle registration number read from the plate of the vehicle.

The respective functional elements and the respective procedural steps of the first embodiment may be opted for or out according to the requirement.

Those ordinarily skilled in the art easily carry out and produce the first embodiment from the above disclosure.

All examples and conditional language recited herein are intended for the pedagogical purposes of aiding the reader in understanding the invention and the concepts contributed by the inventor to further the art, and are not to be construed limitations to such specifically recited examples and conditions, nor does the organization of such examples in the specification relate to a showing of the superiority and inferiority of the invention. Although an embodiment of the present inventions has been described in detail, it should be understood that the various changes, substitutions, and alterations could be made hereto without departing from the spirit and scope of the invention.

## Claims

1. An authentication system comprising:
an authenticator (12) configured to collate an object that is to be authenticated to determine whether the object is valid and sets, when the object is determined to be valid, an authentication state for the object;
a detector (14) configured to continuously detect, after the setting by the authenticator (12), the presence of the object; and
an authentication canceller (17) configured to cancel, when the detector (14) detects the absence of the object, the authentication state set for the object.

2. The authentication system according to claim 1, further comprising a memory controller (16) configured to record, when the detector (14) detects the absence of the object, ambient information of the authentication system into a memory.

3. A processor comprising:
a detector (14) configured to continuously detect, after an object that is to be authenticated is determined to be valid as a result of collation and an authentication state is set for the object determined to be valid, the presence of the object; and
an authentication canceller (17) configured to cancel, when the detector (14) detects the absence of the object, the authentication state set for the object.

4. The processor according to claim 3, further comprising a memory controller (16) configured to record, when the detector (14) detects the absence of the object, ambient information of the processor into a memory.

5. A program which, when executed by a computer, causes the computer to perform a process comprising:
after an object that is to be authenticated is determined to be valid as a result of collation and an authentication state is set for the object determined to be valid,
continuously detecting the presence of the object; and
cancelling, when detecting the absence of the object, the authentication state set for the object.

6. The program according to claim 5, the process further comprising recording, when detecting the absence of the object, ambient information of the computer into a memory.
